# EUROPÄISCHE PATENTSCHRIFT

(11) **EP 0 477 468 B1**
(45) Veröffentlichungstag und Bekanntmachung des Hinweises auf die Patenterteilung: **19.03.1997**
(21) Anmeldenummer: 91109260.9
(22) Anmeldetag: 06.06.1991
(51) Int. Cl.: B65G 35/08, B65B 43/52

(54) **Fördereinrichtung für Werkstückträger**
Transporting device for workpiece carriers
Dispositif de transport pour supports de pièces

(30) Priorität: 26.09.1990 DE 4030362
(43) Veröffentlichungstag der Anmeldung: 01.04.1992
(73) Patentinhaber: Tetra Laval Holdings & Finance SA, 1009 Pully (CH)
(72) Erfinder: Persson, Anders, S-22231 Lund (SE); Pettersson, Leif, W-6108 Weiterstadt (DE)
(74) Vertreter: Weber, Dieter, Dr.

(56) Entgegenhaltungen:
- EP-A- 0 232 583
- CH-A- 573 853
- DE-B- 1 273 415
- DE-B- 2 031 851

## Beschreibung

Die Erfindung betrifft eine Fördereinrichtung mit einem endlos umlaufend angetriebenen und mittels Führungsschienen gehalterten Strang zum Führen von Werkstückträgern, wobei der Strang zwei gerade und zwei gekrümmte Abschnitte aufweist und eine in sich geschlossene Reihe von über Stirnflächen aneinanderliegenden Gliedern aufweist, in denen Ausnehmungen für den Eingriff von Führungen und für die Abstützung durch diese vorgesehen sind.

Bekannt sind Fördereinrichtungen z.B. bei Herstellungsmaschinen für Flüssigkeitspackungen, wo um zwei Umlenkräder, welche vertikale Drehachsen haben, endlos ein Zahnriemen aus Kunststoff umläuft, an welchem Werkstückträger befestigt sind. Die Verwendung von Kunststoffzahnriemen hat den Nachteil, daß durch den Zug des in Förderrichtung vorne angeordneten Antriebsrades der Riemen sich verlängert und dadurch die Positionierung der einzelnen Werkstückträger an gewünschten Positionen nicht exakt und präzise genug erfolgt. Eine Fördereinrichtung dieser Art wird nämlich gern dazu verwendet, einseitig offene Packungen in der Fördereinrichtung aufzunehmen und zu weiteren Bearbeitungsstationen zu fördern. Zum Beispiel sollen die Packungen gefüllt, verschlossen, umverpackt werden usw., wozu die Packungen ersichtlich in der jeweiligen Bearbeitungsstation eine genaue Position einnehmen müssen.

Es gibt auch schon Fördereinrichtungen nach dem Prinzip einer Fahrradkette, bei welcher ein endlos umlaufender Strang von Kettengliedern um zwei Umlenkräder mit horizontal angeordneten Drehachsen umlaufen. Auf solche Fördereinrichtungen wurden die Packungen aufgestellt und ohne Packungsträger z.B. in einer Füllstation unter ein Füllrohr angehoben und wieder abgesenkt. Mit Nachteil ergaben sich hier ebenfalls Positionierungsprobleme, und es konnte sogar vorkommen, daß Packungen umkippten, da sie vorübergehend aus ihren Halterungen entfernt worden waren.

Aus der DE-B-1 273 415 ist eine Fördereinrichtung mit den eingangs genannten Merkmalen bekannt. Dort werden aber die Glieder des Stranges rollend mittels Kugeln durch Bahnen geführt, welche dafür sorgen, daß die Kugeln oder anderweitigen Wälzkörper auf der gesamten Bahn außenseitig und innenseitig in nutenförmige Ausnehmungen der Strangglieder (Schlitten) eingreifen. Die Kugeln werden käfigartig in einem flexiblen Stahl- oder Kunststoffband geführt. An einer Stelle ist innerhalb der Endlosbahn ein Triebstock vorgesehen, dessen Zähne in Ausnehmungen an der innenbahnseitigen Längsführung eingreifen. Abgesehen von dem Aufwand, die bekannten Strangglieder mit einer gehärteten Stahloberfläche zu versehen und Zwischenstützelemente für die Wälzkörper vorzusehen, die geschmiert werden müssen, kann die bekannte Fördereinrichtung nicht im Hygienebereich einer Maschine eingesetzt werden, mit welcher Lebensmittel verpackt werden sollen.

Allen bekannten Fördereinrichtungen war der Nachteil gemeinsam, daß die Transportmittel schlecht zu reinigen waren. Würden derartige Fördereinrichtungen beispielsweise bei der Verpackung von Milch verwendet, und wenn Milch zwischen Fugen einer Fördereinrichtung gelangt, neigt sie infolge der bakteriellen Einwirkung durch Zeit und Temperatur zu erheblicher Verschmutzung, wodurch wiederum Hygieneprobleme bei der Verpackung im laufenden Betrieb entstehen. Es ist notwendig, Maschinen zur Herstellung gefüllter Flüssigkeitspackungen wenigstens einmal am Tag zu reinigen, um insbesondere bei der Verpackung von flüssigen Lebensmitteln (Milch, Säfte usw.) die allgemeinen Hygienebedingungen zu erfüllen. Bei den bekannten Fördereinrichtungen gab es ohne Demontagearbeiten für gewisse Bereiche der Fördereinrichtung keine Reinigungsmöglichkeit. Andererseits verlangt das häufig von den gesetzlichen Bestimmungen geforderte Hygieneproblem ein umständliches Entfernen von Teilen oder Auseinandernehmen der Fördereinrichtung wenigstens teilweise.

Aufgabe der Erfindung ist es daher, eine Fördereinrichtung der vorstehend genannten Art derart zu verbessern, daß trotz vereinfachtem Aufbau ohne umständliche Demontagearbeiten eine gute Reinigung möglich ist und gleichwohl die geförderten Werkstücke exakt geführt und präzise in Bearbeitungsstationen positioniert werden können.

Diese Aufgabe wird erfindungsgemäß dadurch gelöst, daß der um zwei Umlenkräder geführte Strang von Gliedern durch Führungsschienen in den geraden Abschnitten von gegenüberliegenden Seiten und in den gekrümmten Abschnitten von außen abgestützt wird und daß an jedem Glied wenigstens ein Werkstückträger angebracht und jedes Glied auf gegenüberliegenden Seiten wenigstens als Teilnuten ausgestaltete, in Transportlängsrichtung sich erstreckende Ausnehmungen aufweist, wobei auf der Außenseite des Gliedes wenigstens zwei Ausnehmungen angebracht sind, deren eine für den Eingriff mit den Führungsschienen im geraden Abschnitt und deren andere für den Eingriff mit den Führungsschienen in den gekrümmten Abschnitten vorgesehen sind. Die Glieder des Stranges werden nicht mehr über außen und innen am Strang rundumlaufend angebrachte Bahnen geführt und nicht rollend abgestützt (mit der Notwendigkeit einer Schmierung), sondern sie werden durch innen nur teilweise längs der Bewegungsbahn angeordnete Schienen gleitend geführt. Dadurch können die einzelnen Glieder durch geeignete Mittel an dafür vorgesehenen Positionen aus dem Strang herausgenommen und in diesen wieder hereingeführt werden, ohne daß die geringste Demontage durch Abschrauben, Entfernen von Kugelkäfigen oder dergleichen erforderlich ist. Das besonders Vorteilhafte liegt erfindungsgemäß darüberhinaus aber auch noch in der Tatsache, daß zu dem erforderlichen Reinigen nicht einmal ein Herausnehmen eines Gliedes aus dem Strang erforderlich ist. Vielmehr ist die erfindungsgemäße Fördereinrichtung so aufgebaut, daß das jeweilige Glied auf seinem Weg durch den endlosen Strang, d.h. über die geraden und gekrümmten Abschnitte, wenigstens einmal während des Umlaufes von 360° alle Oberflächen freigegeben und damit z.B. der Einwirkung von Reinigungsmittel offengelegt hat. Ohne den geringsten Demontageaufwand kann die gesamte Fördereinrichtung und können insbesondere ihre Glieder nach dem Gebrauch, z.B. nach einem Tagesbetrieb von acht Stunden, durch aus Düsen versprühtes Reinigungsmittel gesäubert werden, und dies sogar während die Fördereinrichtung leer umläuft, denn jede Oberfläche der Fördereinrichtung ist an irgendeiner Stelle des Endlosstranges für die Sprühstrahlen zugänglich. Sogar Ausnehmungen, Vertiefungen oder durch das jeweilige Glied vollständig hindurchgehende Löcher oder dergleichen liegen an einer Stelle des in sich geschlossenen Weges nach außen frei vor, so daß z.B. die Einwirkung von Sprühstrahlen für eine einwandfreie Reinigung sorgen kann.

Zugleich mit den Gliedern werden auch die Werkstückträger gereinigt, denn diese sind fest an den Gliedern befestigt, vorzugsweise ein Werkstückträger an einem Glied oder bei einer bevorzugten anderen Ausführungsform zwei Werkstückträger an einem Glied, wenngleich auch mehrere Werkstückträger an einem Glied des Stranges angebracht sein können.

Wenn lediglich aneinanderliegende und nicht miteinander befestigte Glieder eines Stranges verwendet werden, müssen Halterungsmittel während des Weges der Glieder durch die Fördereinrichtung vorgesehen sein. Diese Halterungsmittel sind die erwähnten Führungsschienen, die bei Verwendung der vorstehend genannten Merkmale in Ausnehmungen gleiten können, welche sich in Längsrichtung des jeweiligen Gliedes erstrecken. Solche Ausnehmungen können die Form von Nuten mit zwei Seitenwänden und einem Grund haben, d.h. im Querschnitt also im wesentlichen die Gestalt eines U. Es genügt aber verständlicherweise, wenn die Ausnehmungen im Querschnitt L-Gestalt haben, d.h. wenn ein Schenkel des U fehlt, denn der andere Schenkel genügt als Anlage für die Führungsschiene, welche außerdem entlang des Grundes dieser Ausnehmung gleitet, so daß eine einwandfreie Führung möglich ist, insbesondere dann, wenn vorzugsweise zwei Führungsschienen verwendet werden. Die in Transportlängsrichtung verlaufenden Führungsschienen geben also die Bahn für die Glieder vor, welche dazwischen einlaufen und in Gleiteingriff mit den Schienen stehen. Während bei einer bevorzugten Ausführungsform die Führungsschienen aus Metall bestehen, kann man die Glieder aus Kunststoff herstellen, beispielsweise ein ultrahochmolekulares Polyethen. Selbstverständlich können die Glieder aber auch aus anderen Kunststoffen und sogar aus Metallen hergestellt sein, wenn durch die entsprechende Formgebung dafür gesorgt ist, daß die Fördereinrichtung im Betrieb nicht einem zu großen Abrieb unterworfen ist.

Für den geraden Abschnitt der Bahn der Glieder sind wenigstens zwei gerade Führungsschienen zweckmäßig, die eine im Bereich außerhalb der Glieder, d.h. von den Umlenkrädern nach außen fort gerichtet, und die andere Führungsschiene nach innen hin, also zu den Umlenkrädern hin gerichtet. Hier gibt es je nach der Zweckmäßigkeit für den Durchschnittsfachmann verschiedene Möglichkeiten, z.B. zwei Führungsschienen außen und eine innen, umgekehrt oder zwei Schienen außen und zwei Schienen innen usw.

Anders liegen die Verhältnisse in den gekrümmten Abschnitten, wo die Glieder die Umlenkräder umlaufen sollen. Auf der Innenseite, d.h. zum jeweiligen Umlenkrad hin, brauchen Führungsschienen nicht vorgesehen zu werden, denn hier übernimmt das jeweilige Umlenkrad die Halterung und Führung der Glieder im gekrümmten Abschnitt. Hingegen müssen außen gekrümmte Führungsschienen vorgesehen sein, um die an und von den Umlenkrädern geführten Glieder auf den Umlenkrädern verbleibend entlang den gekrümmten Abschnitten exakt zu führen, so daß diese nicht radial herausfallen.

Vorteilhaft ist es gemäß der Erfindung ferner, wenn jedes Glied des Stranges quer zur Längsrichtung verlaufende Stirnflächen am vorderen und hinteren Ende aufweist, welche teilweise außenliegend eben und im übrigen teilweise gekrümmt sind, daß eine Bohrung das Glied in Querrichtung durchzieht und einen Bolzen aufnimmt, der in Führungs- und/oder Antriebseingriff mit Zähnen der Umlenkräder kommt, und daß jedes Glied auf der inneren, den Umlenkrädern zugewandten Seite eine sich in Längsrichtung erstreckende Ausnehmung zum Übergreifen der Zähne der Umlenkräder aufweist, wobei diese Ausnehmung von der Bohrung durchquert wird.

Die erwähnte, das jeweilige Glied in Querrichtung durchziehende

Bohrung dient vorzugsweise der Aufnahme eines Befestigungsbolzens, mit dessen Hilfe auf einer oder beiden Seiten des Gliedes die Werkstückträger angebracht werden können. Dabei ist es besonders zweckmäßig, derartige Bolzen mit Paßsitz fest im Glied anzuordnen, weil dadurch die nach außen freien Flächen verringert werden, an welchen Verunreinigungen oder gar Bakterien sich festsetzen könnten. Andere Ausführungsformen kann man sich aber auch mit durch die Querbohrungen verlaufenden Bolzen vorstellen, welche sich gegenüber dem Glied bewegen können.

Ein weiterer Vorteil der Bohrung mit dem von dieser aufgenommenen Bolzen in dem jeweiligen Glied besteht darin, daß die Zähne des jeweiligen Umlenkrades mit dem Bolzen zur Führung und gegebenenfalls Antrieb in Eingriff kommen können. Hierfür weist das Glied gemäß dem vorstehend erwähnten Merkmal die sich in Längsrichtung erstreckende Ausnehmung zum Übergreifen der Umlenkräder auf. Mit anderen Worten laufen wenigstens die Umfangsbereiche mit den Zähnen der Umlenkräder ein Stück weit in dem jeweiligen Glied; nämlich soweit, daß ein seitliches Angreifen des durch die Querbohrung liegenden Bolzens gewährleistet ist. Dies ist auch schon dadurch definiert, daß die Bohrung diese Ausnehmung durchquert, zumal die Bohrung in einer Richtung das Glied durchzieht, welche quer zur Transportlängsrichtung liegt.

Günstig ist es gemäß der Erfindung weiterhin, wenn die Außenmaße aller Glieder des Stranges gleich sind und wenn der Grund wenigstens einer nutenförmigen Ausnehmung um eine in Querrichtung verlaufende Achse gekrümmt und wenn vorzugsweise wenigstens eine nutenförmige Ausnehmung im Querschnitt eckig ist. Zur Vermeidung der schlechten Positioniermöglichkeit ist man bei der erfindungsgemäßen Fördereinrichtung von dem Kunststoffzahnriemen abgekommen. Vielmehr hat man den Zug oder Strang der Glieder in der vorstehend beschriebenen Weise und Ausgestaltung so angeordnet, daß ein Umlenkrad den Antrieb übernimmt und insbesondere den Strang der Glieder nach Verlassen des gekrümmten Abschnittes und Eintreten in den geraden Abschnitt schiebt. Auf diese Weise wird das in Transportrichtung jeweils vordere Glied von dem dahinter angeordneten durch Berührung über die Stirnflächen geschoben. Dieses Schieben sorgt für das Minimalhalten der Abstände der Glieder voneinander, die selbstverständlich in dem hier betrachteten Sinne nicht kompressibel sind und daher jeweils exakt unter der gewünschten Stellung in Position gebracht werden können. Selbstverständlich könnte man beide Umlenkräder für den Antrieb verwenden, es könnte sogar in Transportrichtung das vordere Umlenkrad für den Antrieb sorgen, denn der Schub wird auf der endlosen Bahn durch den Strang fortgesetzt und auch durch die Krümmung von 180° weitergegeben. Günstiger ist es aber, wenn für den Antrieb dasjenige Umlenkrad verwendet wird, welches den Strang von Gliedern in das obere gerade Trum schiebt, zumal in dessen Bereich im allgemeinen alle Bearbeitungsstationen angeordnet sind.

In der nachfolgenden Beschreibung wird erläutert, daß die sich in Längsrichtung erstreckende Ausnehmung auf der Innenseite des Gliedes einen in Querrichtung gesehenen geraden Grund haben kann. Bevorzugt ist es aber entsprechend der letzten Aufzählung vorteilhafter Merkmale, wenn der Grund einer solchen nutenförmigen Ausnehmung auf der Innenseite des Gliedes, d.h. zum Umlenkrad hin gerichtet, gekrümmt ist mit einer Krümmung, welche der des Umfanges des Umlenkrades entspricht. Auf diese Weise wird das Glied von dem jeweiligen Umlenkrad optimal gehaltert, im gekrümmten Bereich umgelenkt und gegebenenfalls gleichzeitig angetrieben.

Für das exakte Schieben und Positionieren muß insbesondere die Länge aller Glieder in Förderrichtung exakt gleich sein. Zwischen jeweils zwei aufeinanderfolgenden Gliedern befindet sich die Stirnfläche, welche einen nach außen hin angeordneten ebenen ersten Bereich hat. Längs diesem liegen zwei in Transportrichtung aufeinanderfolgende Glieder im geraden Trum direkt aneinander und schieben sich somit gegenseitig. Gleichzeitig erfolgt ein Schieben aber auch in dem gekrümmten Abschnitt und zwar über die gekrümmten Bereiche der Stirnfläche, wobei der jeweilige gekrümmte Bereich der Stirnfläche direkt an den jeweils ebenen Bereich anschließt. Der Übergang erfolgt längs einer geraden Linie, d.h. die gekrümmte Stirnfläche hat nur eine Krümmung um eine Achse, die parallel zur Achse des Umlenkrades liegt. Damit erfolgt auch über diesen gekrümmten Bereich der Stirnfläche ein genau anliegender Kontakt, wobei aufeinanderfolgende Glieder des Stranges Linienberührung miteinander haben. Der Schiebeeffekt gemäß der Erfindung ist damit bestens gewährleistet.

Die Führungsschienen sollten im geraden Trum der Fördereinrichtung wenigstens so lang wie der gerade Abschnitt bzw. das gerade Trum sein. Das gleiche gilt für den jeweils gekrümmten Abschnitt an den beiden Enden des geraden Abschnittes. Vorzugsweise überlappen sich die Führungsschienen am Übergang zwischen dem jeweiligen geraden und dem jeweiligen gekrümmten Abschnitt einander, um einen gleichmäßigen Übergang der von den Führungsschienen geführten Glieder aus dem einen Abschnitt in den anderen zu gewährleisten.

Wenn die nutenförmige Ausnehmung im Querschnitt eckig ist, bedeutet dies, daß sich eine mehr oder weniger schwach abgerundete Ecke dort befindet, wo der jeweilige Schenkel des U mit dem diese Schenkel verbindenden Steg des U verbunden ist bzw. in diesen übergeht. Der Vorteil einer solchen im Querschnitt eckigen Nut liegt darin, ein Verkippen des Gliedes zur Seite hin zu vermeiden, wobei dann zweckmäßigerweise auch die Führungsstange im Querschnitt viereckig ist, vorzugsweise quadratisch.

Zweckmäßig ist es gemäß der Erfindung, wenn zwischen dem Glied und dem an diesem befestigten Werkstückträger ein Abstand vorgesehen ist. Diese fakultative Lösung bietet den Vorteil einer besseren Reinigung insbesondere dann, wenn auf einer oder zwei Seiten des Gliedes (quer zu dessen Transportlängsrichtung) ein Werkstückträger über einen Bolzen befestigt ist, welcher durch die Querbohrung hindurchgeht und vorzugsweise unbeweglich mit Paßsitz in dieser angebracht ist. Der Abstand zwischen dem Werkstückträger und der betreffenden Außenwandung des Gliedes (seitliche Ebene) beträgt 1 bis 10 mm, vorzugsweise 2 bis 8 mm. Die auf beiden Seiten dieses Abstandes befindlichen Flächen können dann besser gereinigt werden. Bakterien können sich beim Verwenden der Fördereinrichtung in einer Packungsmaschine für flüssige Speisen nicht mehr sammeln.

Eine besonders bevorzugte Ausführungsform der Erfindung ist ferner dadurch gekennzeichnet, daß das Glied sowohl auf der äußeren als auch auf der inneren, den Umlenkrädern zugewandten Seite, mehrere nutenförmige Ausnehmungen aufweist und in den geraden Abschnitten des Stranges wenigstens zwei gerade Führungsschienen und in den gekrümmten Abschnitten jeweils wenigstens eine gekrümmte Führungsschiene vorgesehen sind, wobei die Führungsschienen sich in den Übergangsbereichen vorzugsweise überlappen. Durch eine solche Vielzahl von Führungsschienen ist eine leichte, reibungsfreie und doch präzise Führung der sonst nur lose aneinanderliegenden Glieder gewährleistet. In den Übergangsbereichen erfolgt eine sehr gleichmäßige Einführungsphase der Glieder durch die überlappenden Schienen. Gleichzeitig sind auch alle Außenflächen der Schienen gut zu reinigen.

Es wurde eingangs erwähnt, daß bekannte Fördereinrichtungen mit den Merkmalen der eingangs genannten Art auch dazu verwendet werden, einseitig offene, leere Packungen in eine Füllstation zu bringen, in welcher die Packungen vorzugsweise unter ein Füllrohr angehoben und während des Füllens langsam abgesenkt werden. Die erfindungsgemäße Fördereinrichtung kann auch für diesen Zweck verwendet werden. Der Aufbau der Glieder der erfindungsgemäßen Fördereinrichtung und ihre Anordnung ohne gegenseitige Verbindung oder ohne Verschraubung mit Halteeinrichtungen eignet sich außer für eine gute Reinigung gleichzeitig auch für die Verwendung in einer Füllstation. Wenn beispielsweise Milch in eine Flüssigkeitspackung abgefüllt werden soll, muß auf die Vermeidung der damit verbundenen im allgemeinen starken Schaumbildung geachtet werden. Die Schaumbildung wird besonders dann in an sich bekannter Weise vermieden, wenn die oben einseitig offene Packung mit ihrem Boden soweit über die Ausgießöffnung eines über der Fördereinrichtung angeordneten Füllrohres einer Füllstation geschoben wird, daß der Abstand zwischen dem Boden und dem untersten Ende des Füllrohres nur noch einige Millimeter oder Zentimeter beträgt. Wenn dann der Ausstoß der Milch in die Packung beginnt, sollte die Packung in zweckmäßiger Weise mit einer Geschwindigkeit in den Strang der Glieder und damit der Werkstückträger oder Packungen zurückgeführt werden, daß der Milchpegel im wesentlichen auf gleicher Höhe bleibt, denn dadurch gibt es am wenigstens Turbulenzen und nur eine geringe Schaumbildung. Dazu aber ist es erforderlich, daß eine Packung vom Förderer in einer Richtung quer zur Förderrichtung, im allgemeinen vertikal nach oben angehoben wird, nachdem sie aus dem Förderstrang ausgeklinkt wird. Es versteht sich, daß ein solcher Förderstrang nur intermittierend weitergeschaltet werden kann und daß das Hochheben unter das Füllrohr nur in einer Ruhephase erfolgt.

Die Maßnahmen zum Anheben eines Werkstückes, welches bei bevorzuger Ausführungsform eine Flüssigkeitspackung ist, erfordert entweder ein Lösen des Werkstückträgers von einem Kettenglied und Bewegen des Werkstückträgers mit der Packung, oder - und dies ist die neue Idee gemäß der Erfindung - das Lösen eines Gliedes aus dem Strang der Glieder zusammen mit dem daran befestigten Werkstückträger, Anheben, Füllen und Wiedereinführen in den Strang. Bei der Fördereinrichtung der eingangs genannten Art, bei welcher der um zwei Umlenkräder geführte Strang von Gliedern durch Führungsschienen in den geraden Abschnitten von gegenüberliegenden Seiten und in den gekrümmten Abschnitten von außen abgestützt wird, wobei an jedem Glied wenigstens ein Werkstückträger angebracht ist und jedes Glied auf gegenüberliegenden Seiten wenigstens als Teilnuten ausgestaltete, in Transportlängsrichtung sich erstreckende Ausnehmungen aufweist, sind die für das Ausführen und Wiedereinführen der Glieder in den Strang vorgesehenen Merkmale erfindungsgemäß weiterhin dadurch gekennzeichnet, daß äußere Führungsschienen im geraden Abschnitt des Stranges über die Länge mindestens eines Gliedes unterbrochen sind, daß ein in Querrichtung zur Transportlängsrichtung translatorisch verstellbares Griffteil eine Längsnut aufweist, mit welcher eine Bodenzunge des Werkstückträgers in Eingriff bringbar ist, und daß in derselben Querrichtung verlaufende Sicherheitsführungsstangen am Griffteil über Tragarme befestigt sind. Eine auf diese Weise ausgestaltete Führungseinrichtung gestattet die vorstehend erwähnten Maßnahmen auf besonders einfache Weise, denn es ist keine Demontage erforderlich, und die Werkstücke, z.B. ein seitig offene, leere Flüssigkeitspackungen, können in den Werkstückträgern gehaltert, zusammen mit den Gliedern bewegt werden. Der Boden des jeweiligen Werkstückträgers eignet sich besonders für die Anbringung einer seitlich herausstehenden Zunge, welche mit einer Längsnut in einem Griffteil in Eingriff gebracht werden kann, so daß über diesen Eingriff Hebe- und Absenkkräfte in zeitlich exakt gesteuerter Weise eingeführt werden können. Über dieses Griffteil wird sozusagen der Werkstückträger direkt und das Glied indirekt gesteuert. Mit anderen Worten wird in das aus dem Strang herauszuhebende Glied die dazu notwendige Kraft über den Werkstückträger eingeleitet. Um weiterhin die durch Herausheben des Gliedes aus dem Strang entstandene Lücke aufrechtzuerhalten und benachbarte Glieder am Hereinkippen in diese Lücke zu hindern, sind die erwähnten Sicherheitsführungsstangen vorgesehen, welche mit der translatorischen Bewegung des Griffteils selbst translatorisch bewegt werden, und zwar in derselben Querrichtung wie das Griffteil, bei der bevorzugten Ausführungsform einer Flüssigkeitspackung zum Befüllen also in vertikaler Richtung; wobei die Transportlängsrichtung des Stranges dann horizontal zu denken ist.

Die Erfindung ist weiter dadurch ausgestaltet, daß das Griffteil an einer in Querrichtung translatorisch verstellbaren Hebestange befestigt ist, die mittels Servomotor, Kurvenrolle oder dergleichen antreibbar und am Rahmen der Fördereinrichtung gelagert ist. Die erwähnten Antriebsmittel sorgen für eine präzise Bewegung, die nicht nur zeitlich sondern auch lokal exakt steuerbar ist, um auch komplizierte Bearbeitungsvorgänge vornehmen zu können, wozu das Einfüllen von Speiseflüssigkeiten in Packungen zu zählen ist.

Das exakte Festhalten der benachbarten Glieder des Stranges bei dessen Stillstand zum Anheben des einen Gliedes mit Werkzeugträger gelingt besonders vorteilhaft dann, wenn erfindungsgemäß der Abstand der Sicherheitsführungsstangen voneinander der Länge eines Gliedes des Stranges entspricht. Beispielsweise können an dem erwähnten Griffteil sogenannte untere Sicherheitsführungsstangen über die genannten Tragarme an einer Stelle befestigt sein, die in Draufsicht auf den Förderstrang innerhalb der Außenkontur des jeweiligen Gliedes liegen, wobei sich die Umfänge tangieren. Dadurch schieben sich diese unteren Sicherheitsführungsstangen praktisch längs der Grenzen der Lücke vor die benachbarten Glieder, welche damit exakt in dem Strang gehaltert werden können. Zusätzlich können gegebenenfalls auch obere Sicherheitsführungsstangen, vorzugsweise stationär, an den Enden der oberen Führungsstangen in Querrichtung zu diesen so angebracht werden, daß auch das herausgehobene Glied von diesen oberen Sicherheitsführungsstangen in seiner Positionierung exakt verbleibt und sich nicht verkippt. Zwar sorgt das Griffteil an und für sich schon ausreichend für eine feste Halterung des ausgeklinkten Gliedes, bei der Belastung dieses vereinzelten Gliedes durch mehrere Werkstückträger kann die Führung aber durch die erwähnten Stangen noch erheblich verbessert und der Gesamtaufbau vereinfacht werden.

Vorteilhaft ist es gemäß der Erfindung ferner, wenn der Werkstückträger die Gestalt eines auf der Innenseite von einem Boden abgeschlossenen, auf der Außenseite offenen Kastens hat. Die Gestalt des Kastens sollte der äußeren Gestalt des zu fördernden Werkstückes entsprechen. Hier kann man sich beispielsweise eine tubusförmige Flüssigkeitspackung vorstellen, deren Tubus außen rund oder auch viereckig sein kann. Entsprechend sollte der Tubus des Kastens ebenfalls außen rund oder viereckig sein. Bei einer besonders bevorzugten Ausführungsform wird von einem im Querschnitt quadratischen Kasten ausgegangen, der aber ebenso gut auch rechteckig sein könnte. Eine Wandung dieses Kastens wird in der oben beschriebenen Weise mit dem Bolzen in der Querbohrung am Glied befestigt, wobei der Kasten oben offen sein sollte und an seinem unteren Ende den Boden mit der genannten Bodenzunge aufweist. "Unten" ist diejenige Richtung der erfindungsgemäßen Fördereinrichtung, welche den Umlenkrädern zugerichtet ist, während "oben" die entgegengesetzte Richtung, und beides in der Vertikalen gesehen zu denken ist. Die Anordnung der Bodenzunge unten erlaubt eine kürzere Anordnung zum Heben des Griffteils, weil sich die vertikalen Wege dadurch verkleinern. Die Bodenzunge ragt vorzugsweise in z.B. horizontal gedachter Richtung in eine Richtung quer zur Längsförderrichtung und vorzugsweise von derjenigen Fläche weg, die bezüglich der Längsmittelachse des Werkstückträgers auf der Seite des Bolzens liegt. Während sich also bezüglich der Längsmittelachse des Werkstückträgers die Bodenzunge in die eine Richtung erstreckt, ist die Seitenwandung oder ein Haltefeld des Werkstückträgers für die Anbringung am Bolzen und am Glied der Fördereinrichtung auf der gegenüberliegenden Seite angeordnet.

Besonders eignet sich die vorstehend beschriebene Fördereinrichtung für die Verwendung des Transportes von einseitig offenen, tubusförmigen Fließmittelpackungen in einer Maschine zum Herstellen und/oder Füllen und/oder Verschließen derartiger Packungen. Damit können viele Vorteile, teilweise auch gleichzeitig, bei derartigen Packungsmaschinen erreicht werden, die mit bekannten Fördereinrichtungen nur unvollständig, einzeln oder gar nicht erreicht werden konnten.

Weitere Vorteile, Vorteilhafte Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. Es zeigen:
- Figur 1: perspektivisch die Fördereinrichtung mit den von Führungsschienen gehalterten Gliedern und zwei Umlenkrädern, allerdings ohne Werkstückträger,
- Figur 2: perspektivisch ein Glied des Stranges einer ersten Ausführungsform,
- Figur 3: eine Seitenansicht auf das Glied der Figur 2 in Querrichtung zu dessen Längsförderrichtung,
- Figur 4: eine Draufsicht auf das Glied der Figur 2 von rechts vorn,
- Figur 5: eine Draufsicht auf das Glied,

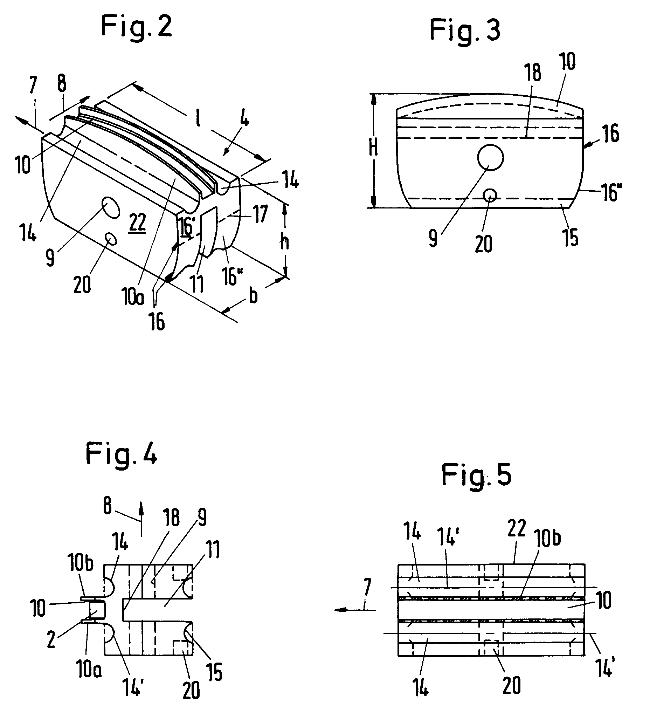

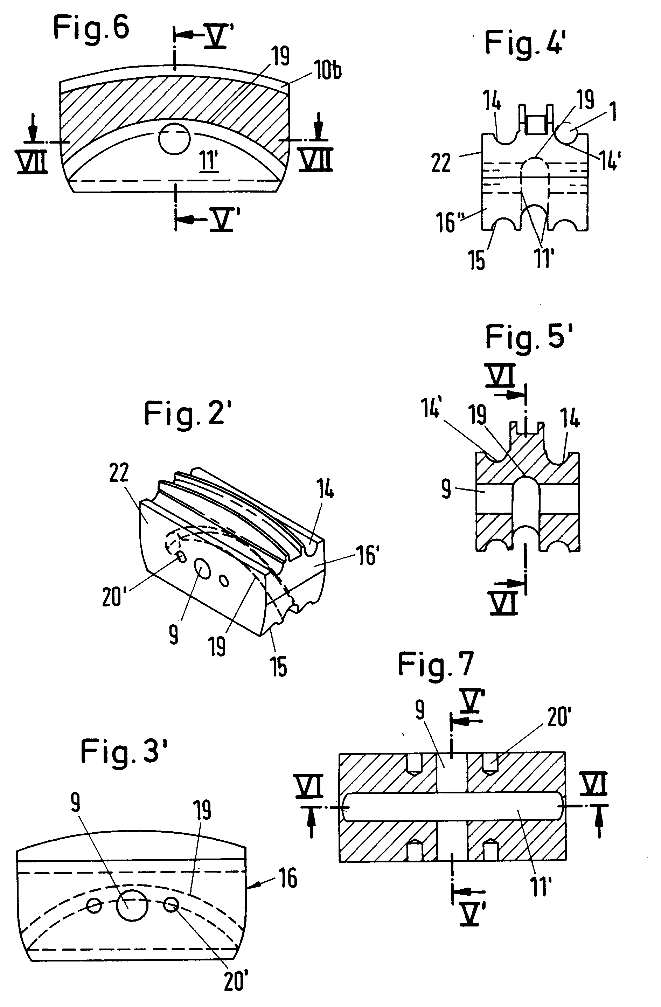

- Figur 2': die perspektivische Ansicht einer anderen Ausführungsform eines Gliedes,
- Figur 3': eine Seitenansicht in Querrichtung der durchgehenden Bohrung,
- Figur 4': eine Ansicht der Stirnseite von rechts vorn auf das Glied in Transportlängsrichtung der Figur 2',
- Figur 5': eine Querschnittsansicht entlang der Linien V'-V' nach den Figuren 6 und 7,
- Figur 6: eine Längsschnittansicht entlang der Linie VI-VI der Figur 5',
- Figur 7: eine Querschnittsansicht entlang der Linie VII-VII der Figur 6,

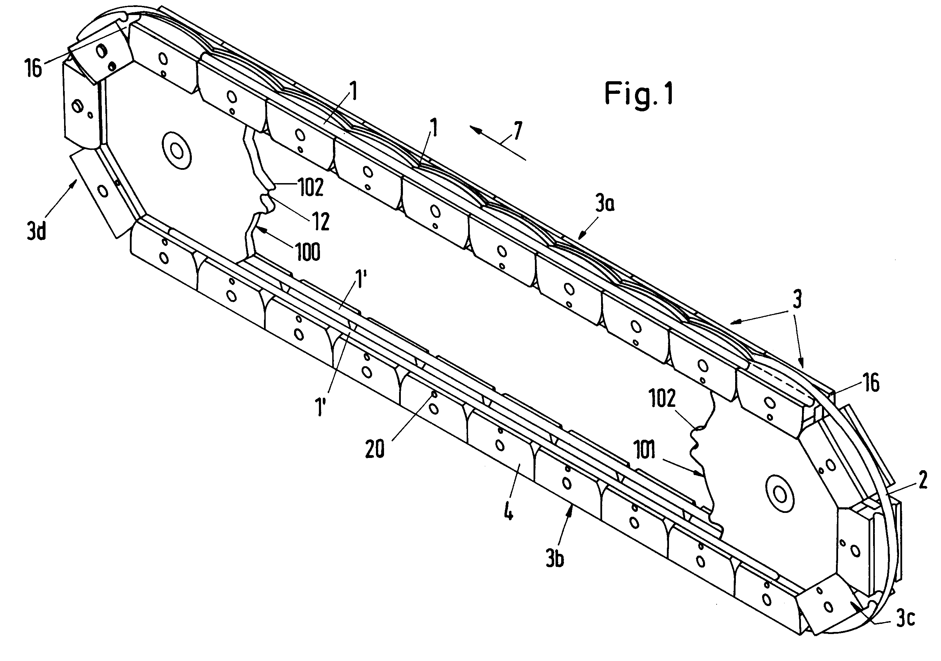

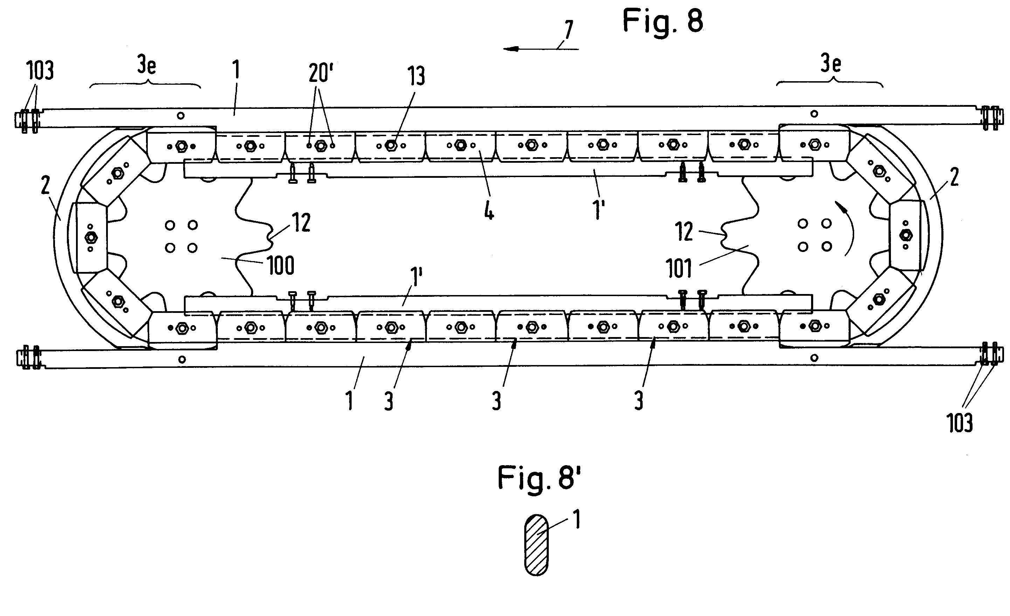

- Figur 8: die Seitenansicht der Fördereinrichtung einer anderen Ausführungsform als Figur 1 mit Umlenkrädern aber ohne Werkstückträger,

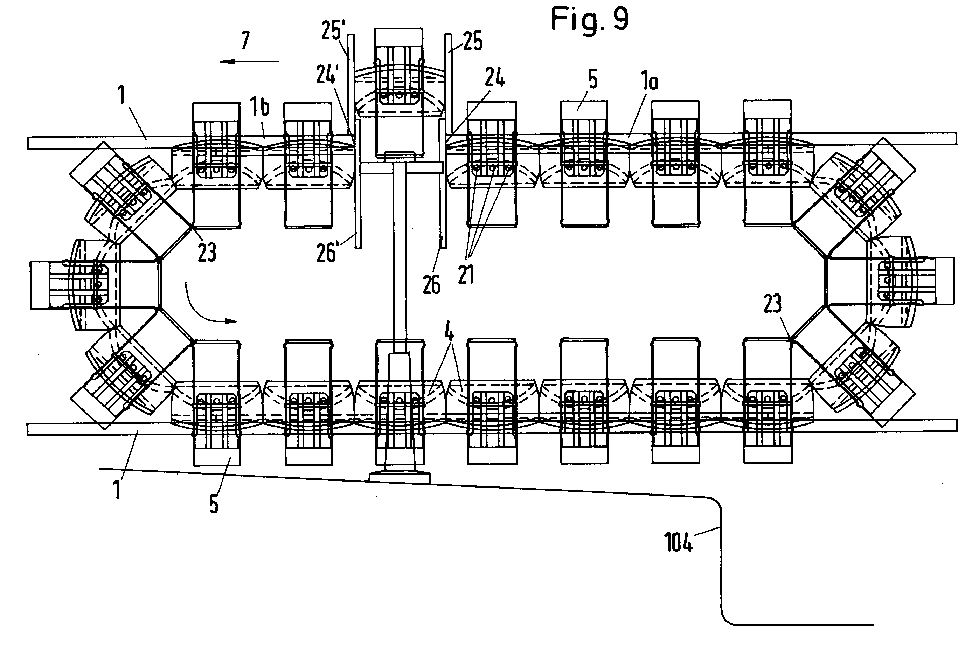

- Figur 9: eine Fördereinrichtung ähnlich der Figur 8, wobei jedoch die Werkstückträger angebracht gezeigt sind und an einer Stelle ein Glied mit Werkstückträger mittels einer Hebestange aus dem Strang herausgehoben dargestellt ist,

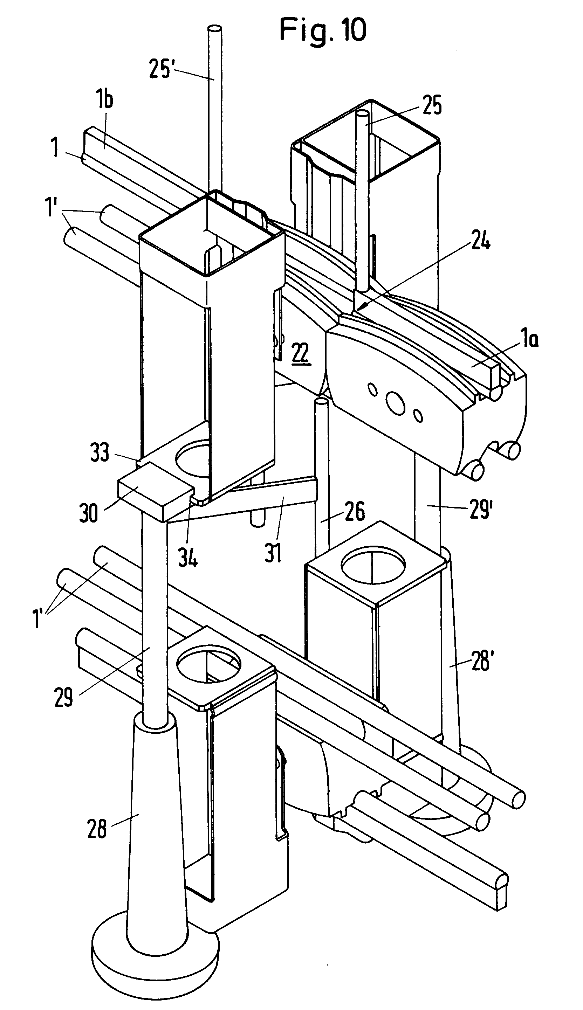

- Figur 10: perspektivisch und abgebrochen einen Ausschnitt aus demjenigen Teil der Fördereinrichtung, bei welchem die oberen Führungsschienen unterbrochen sind, mit auf beiden Seiten des Gliedes angeordneten Werkstückträgern,

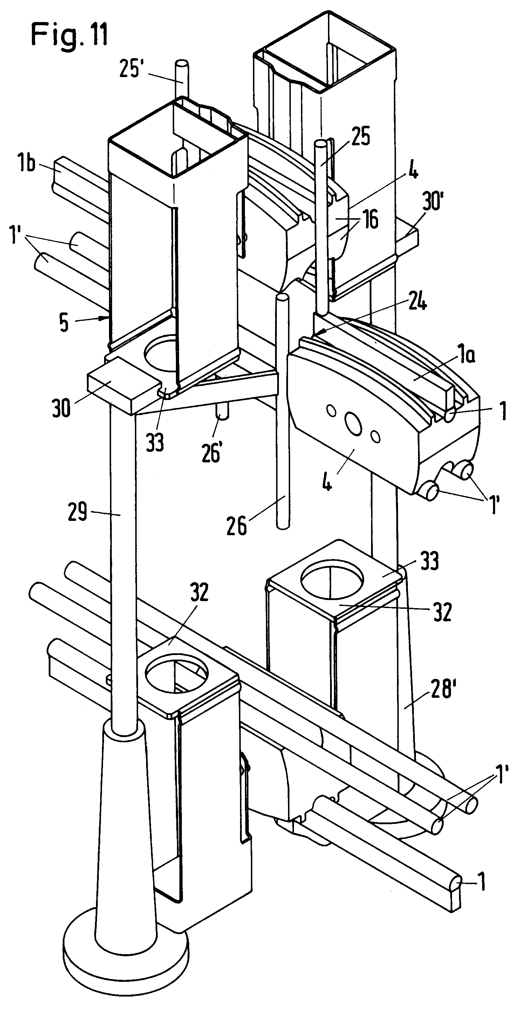

- Figur 11: eine ähnliche Ansicht wie Figur 10, wobei jedoch ein Glied mit zwei Werkstückträgern aus dem oberen Strang von Gliedern herausgehoben dargestellt ist,

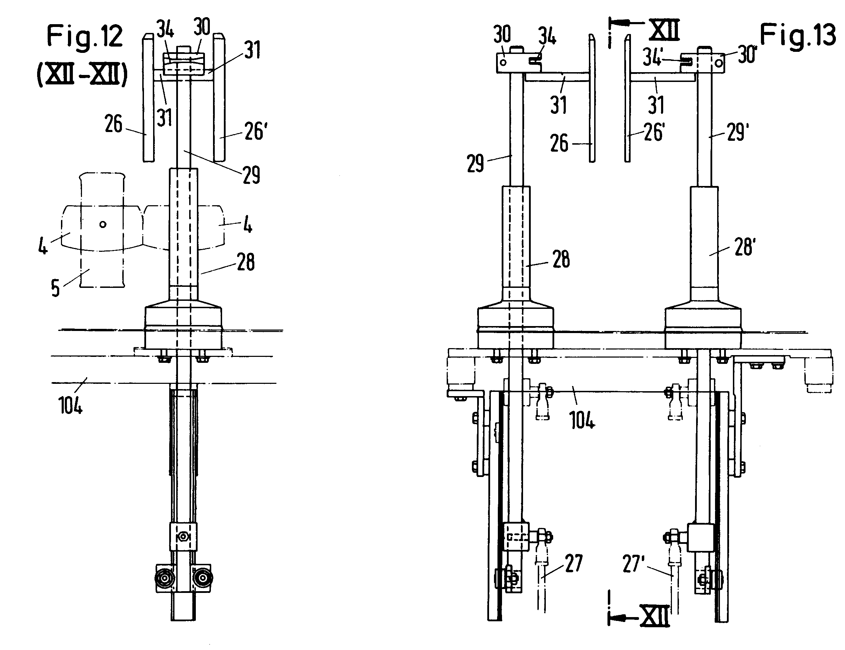

- Figur 12: eine abgebrochene Seitenansicht entlang der Linie XII-XII der Fig. 13 zur Darstellung des Aushebens eines Gliedes aus dem Strang,
- Figur 13: die Darstellung der Hebeeinrichtung in Transportlängsrichtung,

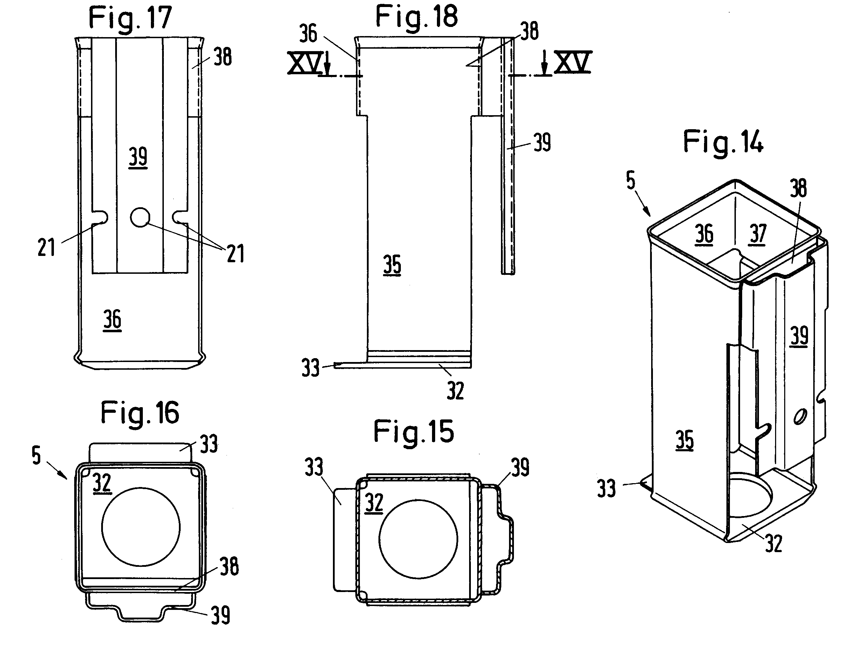

- Figur 14: perspektivisch einen Werkstückträger,
- Figur 15: eine Querschnittsansicht des Werkstückträgers entlang der Linie XV-XV in Figur 18,
- Figur 16: eine Draufsicht auf den Werkstückträger der Figur 14,
- Figur 17: eine Seitenansicht auf den Werkstückträger von innen, wenn man in Figur 14 von rechts vorn nach links hinten blickt und
- Figur 18: eine Seitenansicht in Transportlängsrichtung, wenn man auf die Ansicht der Figur 14 von links vorn nach rechts hinten blickt.

Die ohne Werkstückträger in Figur 1 dargestellte Fördereinrichtung weist einen um zwei Umlenkräder 100, 101 endlos umlaufend angetriebenen und mittels Führungsschienen 1, 1', 2 gehalterten und allgemein mit 3 bezeichneten Strang von Gliedern 4 zum Führen von Werkstückträgern 5 auf, die erst in den Figuren 9 ff. dargestellt sind. Der Strang 3 weist einen oberen geraden Abschnitt 3a, einen unteren geraden Abschnitt 3b, einen rechten gekrümmten Abschnitt 3c und einen linken (alles in Figur 1 gesehen) gekrümmten Abschnitt 3d auf.

Aus der Figur 1 erkennt man, wie sich ein endloser Strang 3 von Gliedern 4 gegenseitig über Stirnflächen 16 schiebend aneinanderliegt. Ist beispielsweise das vordere rechte Umlenkrad 101 das um seine horizontale Drehachse angetriebene Zahnrad mit den Zähnen 102, dann wird die Transportrichtung der Glieder 4 im Bereich des oberen geraden Abschnittes 3a als gemäß Figur 1 von vorn rechts nach links hinten in Richtung des Pfeiles 7 angenommen. Die Transportrichtung liegt also in Richtung dieses geraden Pfeiles 7. Die in Transportrichtung 7 vorn liegenden Glieder 4 werden also von den dahinterliegenden geschoben, welche in Figur 1 weiter rechts angeordnet sind, denn das rechte Umlenkrad 101 dreht sich in Gegenuhrzeigerrichtung.

In den geraden Abschnitten befinden sich außen, d.h. von den Umlenkrädern 100, 101 fort gerichtet, zwei gerade Führungsschienen 1, und innen verlaufen jeweils zwei weitere gerade Führungsschienen 1', die besonders deutlich in Figur 1 am unteren Trum zu sehen sind. In den gebogenen Abschnitten 3c und 3d ist nur außen eine einzige gekrümmte Führungsschiene 2 angeordnet, weil die Glieder 4 innen von den jeweiligen Umlenkrädern 100, 101 gehaltert und geführt werden.

In den Figuren 8 und 9 sieht man gleichfalls die Fördereinrichtung von der Seite, wobei die Umlenkräder 100, 101 in Figur 8 etwas anders ausgestaltet und in Figur 9 rein schematisch angedeutet sind. Man erkennt obere und untere gerade Führungsschienen 1, deren Querschnittsform in Figur 8' dargestellt ist. Sie sind im Querschnitt länglich mit abgerundeten oberen und unteren Kanten, welche mit den Gliedern 4 in Gleiteingriff treten, und sind länger ausgebildet als die Länge des geraden Abschnittes des Stranges 3 von Gliedern 4. In den mit 3e bezeichneten Übergangsbereichen werden die geraden Führungsschienen 1 von gekrümmten Führungsschienen 2 überlappt. (In Figur 9 sind diese gekrümmten Führungsschienen nicht dargestellt). Die Schraubenpaare 103 sorgen für eine Befestigung der Führungsschienen 1 an nicht dargestellten Halterungen des Maschinenrahmens 104.

Zum besseren Verständnis der weiteren Ausführungen wird zunächst eine erste Ausführungsform eines Gliedes 4 des Stranges anhand der Figuren 2 bis 5 dargestellt. Allgemein ist das Glied 4 in Figur 2 perspektivisch dargestellt mit drei Seitenansichten nach den Figuren 3, 4 und 5. Die Transportlängsrichtung ist in den Figuren 2 und 5 wieder durch den Pfeil 7 gekennzeichnet. Man erkennt, daß das Glied 4 die Form eines Quaders hat, der in Transportlängsrichtung 7 länger ist als in Querrichtung, welche in den Figuren 2 und 4 durch den Pfeil 8 dargestellt ist. Während sich der Strang 3 in Längsrichtung 7 z.B. horizontal erstreckt, verläuft die Querrichtung 8 ebenfalls horizontal, wie auch die Bohrung 9, welche das Glied 4 in Querrichtung 8 durchzieht.

Die Länge l eines Gliedes 4 beträgt bei einer bevorzugten Ausführungsform 150 mm, seine Breite b beträgt 70 mm wie auch seine Höhe h. Diese Höhe h ist zwischen zwei geraden Längskanten außen am Glied 4 gemessen, wobei sich auf der oberen äußeren Fläche in der Mitte eine sich in Transportlängsrichtung 7 erstreckende, nutenförmige Ausnehmung 10 erstreckt, die gebogen ist mit zwei Seitenwangen 10a und 10b, so daß sich über die gesamte Höhe H ein Maß von etwa 90 mm ergibt.

Die Bohrung 9 durchzieht das Glied 4 in Querrichtung 8 auf etwa halber Höhe derart, daß die Bohrung 9 auch eine sich in Transportlängsrichtung 7 erstreckende untere Ausnehmung 11 durchzieht. Diese befindet sich bei im Strang eingebautem Glied 4 auf der inneren, den Umlenkrädern 100, 101 zugewandten Seite. Man erkennt aus den Figuren 1 und 8 besonders deutlich, wie in dieser unteren Ausnehmung 11 die Zähne 102 der Umlenkräder 100, 101 aufgenommen werden bzw. durchlaufen, so daß das Glied 4 mit Hilfe seiner Ausnehmung 11 die Umlenkräder 100, 101 praktisch übergreift. Der Sinn, daß diese untere Ausnehmung 11 von der Bohrung 9 durchquert wird, ist der Antrieb, denn die in den Figuren 1 und 8 dargestellte Vertiefung 12 im Zahn 102 des jeweiligen Umlenkrades 100, 101 umgreift den in Figur 8 gezeigten Bolzen 13, welcher mit Paßsitz fest in der Bohrung 9 angebracht ist. Damit läßt sich über das rechte Umlenkrad 101 jedes der fünf, im gekrümmten Abschnitt 3c befindliche Glied 4 antreiben und schiebt die in Transportrichtung 7 davorliegenden Glieder 4 mit Schiebeeffekt, so daß keine Verlängerung des Stranges auch bei Einleitung hoher Schubkräfte befürchtet werden muß.

Das Glied 4 hat sowohl bei der Ausführungsform nach den Figuren 2 bis 5 als auch bei der nach den Figuren 2' bis 5', 6 und 7 auf der oberen Fläche in Längsrichtung 7 sich erstreckende Nuten 10, 14, wobei die mittlere Nut 10 mit dem eckigen Querschnitt auf beiden Seiten der Wangen 10a, 10b von oberen seitlichen Nuten 14 umgeben wird, deren Grund 14' gerade ist und im Querschnitt im wesentlichen gleichmäßige Krümmung hat. Dieser Grund 14' ist in Figur 5 durch eine gerade Linie und in den Figuren 4' und 5' durch einen Kreuzpunkt 14' gekennzeichnet.

Auch auf der gegenüberliegenden, unteren Seite erstrecken sich parallel drei Ausnehmungen 11, 15, wobei die tiefe mittlere Ausnehmung 11 bereits besprochen wurde, die außen von zwei seichteren Nuten 15 umgeben ist.

Bei der ersten Ausführungsform nach den Figuren 2 bis 5 ist die obere mittlere Ausnehmung 10 für den Gleiteingriff der gekrümmten Führungsschiene 2 gedacht, die in der Darstellung der Figur 4 mit viereckigem Querschnitt dargestellt ist. Die beiden äußeren oberen Nuten 14 dienen für den Gleiteingriff mit den geraden Führungsschienen 1, welche über den gesamten geraden Abschnitt 3a bzw. 3b parallel verlaufen.

Die mittlere tiefe Ausnehmung 11 soll den Umfang der Umlenkräder 100, 101 übergreifen und aufnehmen, wobei gleichzeitig der Bolzen 13 in der Bohrung 9 frei in dieser tiefen Ausnehmung 11 so verläuft, daß die Zähne 102 mit dem Bolzen 13 in Führungs- und/oder Antriebseingriff gebracht werden können. Die äußeren unteren seichteren Nuten 15 dienen wieder für den Gleiteingriff mit den inneren Führungsschienen 1' im Bereich der geraden Abschnitte 3a und 3b. Auf diese Weise ist das Glied 4 durch die beschriebene Führungsschiene exakt zu führen.

Am vorderen und am hinteren Ende ist jedes Glied 4 mit einer Stirnfläche 16 versehen, welche oberhalb der gestrichelten Linie 17 (Figur 2) eine ebene Fläche 16' ist, während sich unter der Geraden 17 eine gekrümmte Fläche 16'' anschließt. Im geraden Abschnitt 3a, 3b des Stranges 3 schiebt das eine Glied 4 das jeweils andere über die ebene Stirnfläche 16', und in den gekrümmten Abschnitten 3c, 3d erfolgt das gegenseitige Schieben längs einer Linienberührung zwischen den gekrümmten Stirnflächen 16''.

Sehr ähnlich ist das Glied 4 nach der zweiten Ausführungsform aufgebaut, welches in den Figuren 2' bis 5', 6 und 7 dargestellt ist. Der wesentlichste Unterschied besteht in der Ausgestaltung der tiefen Ausnehmung 11', welche nicht (wie bei der ersten Ausführungsform längs der gestrichelten Linie 18 in Längsrichtung 7 gleichmäßig und) gerade von vorn nach hinten durchläuft, sondern längs der Linie 19 über einen Bogen von vorn nach hinten verläuft. Die Krümmungsachse dieses Bogens läuft in Querrichtung 8 und liegt etwa in der Drehachse der Umlenkräder 100, 101, so daß sich die Zähne 102 im Bewegungsverlauf durch diese tiefe Ausnehmung 11' gut hindurchbewegen können. Hierbei versteht sich, daß die Vertiefung 12 jedes Zahnes 102 bezüglich der Bohrung 9 fest ist, denn in ihr liegt der Bolzen 13. Diese zweite Ausführungsform bietet ein etwas kräftigeres Glied 4, weil es in der Mitte durch die tiefe Ausnehmung 11 nicht vergleichsweise geschwächt ist.

Die Anordnung der ebenen Stirnflächen 16' mehr nach außen hin sowie der gekrümmten Stirnflächen 16'' der Glieder sieht man in ihrer strangartigen Anordnung in der Schiebefunktion am besten in Figur 8. Neben der hauptsächlichen Bohrung 9, welche das Glied 4 in Querrichtung 8 durchzieht und der Aufnahme des Bolzens 13 für den Antriebseingriff einerseits und die Befestigung der Werkstückträger 5 andererseits dient, ist bei der ersten Ausführungsform des Gliedes 4 nach den Figuren 2 bis 5 eine zusätzliche Hilfssackbohrung 20 angebracht, welche ebenso wie die zwei beidseitig zur Bohrung 9 angebrachten Hilfssackbohrungen 20' bei der Ausführungsform nach den Figuren 2' bis 5', 6 bis 8 zur Halterung des Werkstückträgers 5 dienen, damit dieser beispielsweise gegen die Drehung um eine Achse in Querrichtung 8 am Glied 4 festgelegt ist.

In den Figuren 9 ff. ist der Werkstückträger 5 am Glied 4 befestigt gezeigt. Mit nicht dargestellten Schrauben können die Werkstückträger 5 über die Bohrungen 21 am Glied 4 im Abstand von dessen ebenen Seitenwänden 22 festgelegt werden. Ihre Größe ist bezüglich der gekrümmten Abschnitte 3c und 3d des Stranges 3 so ausgelegt, daß sie sich an den in Figur 9 mit 23 bezeichneten Punkten noch nicht ganz berühren, um einen einwandfreien Umlauf des Stranges 3 sicherzustellen.

Die äußeren Führungsschienen 1 im oberen geraden Abschnitt 3a oder auch nur eine gerade Führungsschiene 1 sind/ist an der in Figur 9 in der Mitte oben dargestellten Position unterbrochen, wobei man diese Unterbrechung besser noch in den perspektivischen Darstellungen der Figuren 10 und 11 sieht. Bei diesen gibt es jeweils außen nur eine Führungsschiene 1, während sowohl im oberen als auch im unteren geraden Bereich 3a bzw. 3b innen jeweils zwei gerade Führungsschienen 1' angeordnet sind. Selbstverständlich genügt es, nur die äußere obere Führungsschiene 1 an der Stelle 24 abzubrechen. Die gegenüberliegende Seite (in den Figuren 10 und 11 links) ist nur in Figur 9 sichtbar und mit 24' bezeichnet. Der zwischen diesen Stellen 24, 24' befindliche Raum entspricht in seiner Länge der Länge l eines Gliedes 4 derart, daß gemäß Darstellung der Figur 9 bündig mit den Stirnflächen 16 die innere Oberfläche einer oberen Sicherheitsführungsstange 25, 25' liegt und auf der lückenseitigen Stirnfläche der beiden im Strang 3 verbliebenen Glieder 4 mit außenseitiger Berührung sogenannte untere Sicherheitsführungsstangen 26, 26' zu liegen kommen.

Die Figuren 12 und 13 veranschaulichen die gesamte Hebeeinrichtung, deren Antrieb sich unterhalb des allgemein horizontal angeordneten Rahmens 104 befindet. Über Antriebsstangen 27, 27' werden in Führungshülsen 28, 28' geführte Hebestangen 29, 29' mit an ihrem vertikal oberen freien Ende angebrachtem Griffteil 30, 30' durch ganz unten angeordnete und in den Figuren nicht dargestellte Steuerkurven angehoben und abgesenkt. An den Hebestangen 29, 29' sind außerdem über Tragarme 31 die unteren Sicherheitsführungsstangen 26, 26' befestigt, die sich mithin zusammen mit dem Griffteil 30, 30' mit der Hebestange 29, 29' mitbewegen.

Stationär hingegen sind die oberen Sicherheitsführungsstangen 25, 25', wie man deutlich aus den Figuren 10 und 11 sehen kann, an Schienenversteifungen 1a und 1b befestigt. Diese oberen Sicherheitsführungsstangen 25, 25' sind nicht unbedingt notwendig, dienen aber dazu, ein Verkippen des ausgeklinkten und angehobenen Gliedes 4 zu vermeiden. Dieses liegt nämlich mit seiner ebenen Stirnfläche 16' linienartig gegen die obere Sicherheitsführungsstange 25, 25' an und wird von dieser geführt. An der ebenen Seitenfläche 22 des jeweiligen Gliedes 4 sind mit Abstand die allgemein mit 5 bezeichneten Werkstückträger angebracht, so daß sich eine starre Einheit von linkem Werkstückträger, verbunden mit dazwischen angeordnetem Glied 4, und rechtem Werkstückträger 5 bildet. Diese Einheit würde durch die Unterbrechung der äußeren Führungsschiene 1 an den Stellen 24, 24' ungeführt verbleiben, wenn nicht der Boden 32 eine zu der vom Strang 3 weggerichteten Seite hin herausragende Bodenzunge 33 hätte, welche gerade in eine Nut 34 bzw. 34' im Griffteil 30 bzw. 30' eingreifen kann, wie dies im Eingriff in den Figuren 9 bis 11 dargestellt ist. Die Funktion der fehlenden Führungsschiene 1 wird von dem Griffteil 30 bzw. 30' übernommen, über welches die Hebe- und Haltekraft von beiden Seiten eingeleitet wird und damit auch das dazwischen befestigte Glied 4 steuert.

Der Werkstückträger ist in den Figuren 14 bis 18 gezeigt. Er besteht aus vier ebenen und längs des dadurch gebildeten Tubus verlaufenden Kanten miteinander verbundenen Seitenwänden 35, 36, 37, 38, von denen die dem Strang 3 zugewandte Fläche 38 aufgeteilt ist in eine kurze obere Wandung und einem daran im Abstand angebrachten, weiter nach unten herunterhängend vorgesehenen Halteblech 39, welches etwa gleichweit zur einen Seite, nämlich zum Strang 3 hin, aus der Seitenwandung 38 hervorsteht, wie der Boden 32 unten zur gegenüberliegenden Seite mit der Bodenzunge 33 heraussteht. Das im Boden 32 gezeigte Loch dient einerseits der Material- und Gewichteinsparung; es dient auch der Verkleinerung der Oberfläche, an welchen sich Bakterien sammeln könnten, und man kann durch dieses Loch auch besser Reinigungsmittel einsprühen oder gar Werkzeuge einführen, welche Arbeiten innerhalb des Werkstückhalters 5 durchführen müßten. An den Löchern 21 des Haltebleches 39 werden die Werkstückträger 5 an dem jeweiligen Glied 4 befestigt, z.B. über Bolzen, und dies in einem Abstand von z.B. 5 mm, damit alle Oberflächen den Sprühstrahlen des Reinigungsmittels frei gegenüberstehen.

## Patentansprüche

1. Fördereinrichtung mit einem endlos umlaufend angetriebenen und mittels Führungsschienen (1, 1', 2) gehalterten Strang (3) zum Führen von Werkstückträgern (5), wobei der Strang (3) zwei gerade (3a, 3b) und zwei gekrümmte Abschnitte (3c, 3b) aufweist und eine in sich geschlossene Reihe von über Stirnflächen (16) aneinanderliegenden Gliedern (4) aufweist, in denen Ausnehmungen (10, 11, 11', 14, 15) für den Eingriff von Führungen (1, 1', 2) und für die Abstützung durch diese vorgesehen sind, dadurch gekennzeichnet, daß der um zwei Umlenkräder (100, 101) geführte Strang (3) von Gliedern (4) durch Führungsschienen (1, 1', 2) in den geraden Abschnitten (3a, 3b) von gegenüberliegenden Seiten und in den gekrümmten Abschnitten (3c, 3d) von außen abgestützt wird und daß an jedem Glied (4) wenigstens ein Werkstückträger (5) angebracht ist und jedes Glied (4) auf gegenüberliegenden Seiten wenigstens als Teilnuten (10, 11, 11', 14, 15) ausgestaltete, in Transportlängsrichtung (7) sich erstreckende Ausnehmungen (10) aufweist, wobei auf der Außenseite des Gliedes (4) wenigstens zwei Ausnehmungen (10, 14) angebracht sind, deren eine (14) für den Eingriff mit den Führungsschienen (1, 1') im geraden Abschnitt (3a, 3b) und deren andere (10) für den Eingriff mit den Führungsschienen (2) in den gekrümmten Abschnitten (3c, 3d) vorgesehen sind.

2. Fördereinrichtung nach Anspruch 1, dadurch gekennzeichnet, daß jedes Glied (4) des Stranges (3) quer zur Längsrichtung (7) verlaufende Stirnflächen (16) am vorderen und hinteren Ende aufweist, welche teilweise außenliegend eben (16') und im übrigen teilweise (16'') gekrümmt sind, daß eine Bohrung (9) das Glied (4) in Querrichtung (8) durchzieht und einen Bolzen (13) aufnimmt, der in Führungs- und/oder Antriebseingriff mit Zähnen (102) der Umlenkräder (100, 101) kommt, und daß jedes Glied (4) auf der inneren, den Umlenkrädern (100, 101) zugewandten Seite eine sich in Längsrichtung (7) erstreckende Ausnehmung (11) zum Übergreifen der Zähne (102) der Umlenkräder (100, 101) aufweist, wobei diese Ausnehmung (11) von der Bohrung (9) durchquert wird.

3. Fördereinrichtung nach Anspruch 1 oder 2, dadurch gekennzeichnet, daß die Außenmaße (l, b, h, H) aller Glieder (4) des Stranges (3) gleich sind und daß der Grund wenigstens einer nutenförmigen Ausnehmung (10, 11') um eine in Querrichtung (8) verlaufende Achse gekrümmt und daß vorzugsweise wenigstens eine nutenförmige Ausnehmung (10) im Querschnitt eckig ist.

4. Fördereinrichtung nach einem der Ansprüche 1 bis 3, dadurch gekennzeichnet, daß zwischen dem Glied (4) und dem an diesem befestigten Werkstückträger (5) ein Abstand vorgesehen ist.

5. Fördereinrichtung nach einem der Ansprüche 1 bis 4, dadurch gekennzeichnet, daß das Glied (4) sowohl auf der äußeren als auch auf der inneren, den Umlenkrädern (100, 101) zugewandten Seite mehrere nutenförmige Ausnehmungen (14, 15, 10, 11, 11') aufweist und in den geraden Abschnitten (3a, 3b) des Stranges (3) wenigstens zwei gerade Führungsschienen (1, 1') und in den gekrümmten Abschnitten (3c, 3d) jeweils wenigstens eine gekrümmte Führungsschiene (2) vorgesehen sind, wobei die Führungsschienen (1, 1', 2) sich in den Übergangsbereichen (3e) vorzugsweise überlappen.

6. Fördereinrichtung mit einem endlos umlaufend angetriebenen und mittels Führungsschienen (1, 1', 2) gehalterten Strang (3) zum Führen von Werkstückträgern (5), wobei der Strang (3) zwei gerade (3a, 3b) und zwei gekrümmte Abschnitte (3c, 3b) aufweist und eine in sich geschlossene Reihe von über Stirnflächen (16) aneinanderliegenden Gliedern (4) aufweist, in denen Ausnehmungen (10, 11, 11', 14, 15) für den Eingriff von Führungen (1, 1', 2) und für die Abstützung durch diese vorgesehen sind, dadurch gekennzeichnet, daß der um zwei Umlenkräder (100, 101) geführte Strang (3) von Gliedern (4) durch Führungsschienen (1, 1', 2) in den geraden Abschnitten (3a, 3b) von gegenüberliegenden Seiten und in den gekrümmten Abschnitten (3c, 3d) nur von außen abgestützt wird und an jedem Glied (4) wenigstens ein Werkstückträger (5) angebracht ist und jedes Glied (4) auf gegenüberliegenden Seiten wenigstens als Teilnuten (10, 11, 11', 14, 15) ausgestaltete, in Transportlängsrichtung (7) sich erstreckende Ausnehmungen (10) aufweist, wobei äußere Führungsschienen (1) im geraden Abschnitt (3a, 3b) des Stranges (3) über die Länge (l) mindestens eines Gliedes (4) unterbrochen sind, ein in Querrichtung (8) zur Transportlängsrichtung (7) translatorisch verstellbares Griffteil (30, 30') eine Längsnut (34, 34') aufweist, mit welcher eine Bodenzunge (33) des Werkstückträgers (5) in Eingriff bringbar ist, und in derselben Querrichtung (8) verlaufende Sicherheitsführungsstangen (26, 26') am Griffteil (30, 30') über Tragarme (31) befestigt sind.

7. Fördereinrichtung nach Anspruch 6, dadurch gekennzeichnet, daß das Griffteil (30, 30') an einer in Querrichtung (8) translatorisch verstellbaren Hebestange (29, 29') befestigt ist, die mittels Servomotor, Kurvenrolle oder dergleichen antreibbar und am Rahmen (104) der Fördereinrichtung gelagert ist.

8. Fördereinrichtung nach Anspruch 6 oder 7, dadurch gekennzeichnet, daß der Abstand der Sicherheitsführungsstangen (25, 25'; 26, 26') voneinander der Länge (l) eines Gliedes (4) des Stranges (3) entspricht.

9. Fördereinrichtung nach einem der Ansprüche 6 bis 8, dadurch gekennzeichnet, daß der Werkstückträger (5) die Gestalt eines auf der Innenseite von einem Boden (32) abgeschlossenen, auf der Außenseite offenen Kastens hat.

10. Verwendung einer Fördereinrichtung nach einem der Ansprüche 1 bis 9 zum Transportieren von einseitig offenen, tubusförmigen Fließmittelpackungen in einer Maschine zum Herstellen und/oder Füllen und/oder Verschließen derartiger Packungen.

## Claims

1. Conveying means with a string (3), driven in a continuously circulating manner and retained by means of guide rails (1, 1', 2), for guiding workpiece carriers (5), wherein the string (3) has two straight sections (3a, 3b) and two curved sections (3c, 3d) and a self-contained row of members (4) lying end-face to end-face (16) in which recesses (10, 11, 11', 14, 15) are provided for the engagement of guides (1, 1', 2) and for supported thereby, characterised in that the string (3) of members (4) guided around two guide wheels (100, 101) is supported by guide rails (1, 1', 2) from opposite sides in the straight sections (3a, 3b), and from outside in the curved sections (3c, 3d), and that at least one workpiece carrier (5) is fitted onto each member (4) and each member (4) is provided on opposite sides with at least partly grooved (10, 11, 11', 14, 15) recesses (10) extending in the longitudinal direction of transport (7), wherein on the outside of the member (4) at least two recesses (10, 14) are fitted, one (14) of which is provided for engaging with the guide rails (1, 1') in the straight section (3a, 3b), and the other (10) for engaging with the guide rails (2) in the curved sections (3c, 3d).

2. Conveying means according to claim 1, characterised in that each member (4) of the string (3) is provided with end-faces (16) at right-angles to the longitudinal direction (7) on the front and rear ends, which are externally partially flat (16'), the remainder being curved (16''), that a bore (9) passes through the member (4) in the transverse direction (8) and receives a bolt (13) which comes into a guiding and/or driving engagement with teeth (102) of the guide wheels (100, 101), and that on its inner side facing the guide wheels (100, 101), each member (4) has a recess (11) extending in the longitudinal direction (7) for gripping over the teeth (102) of the guide wheels (100, 101), wherein the bore (9) passes across this recess (11).

3. Conveying means according to claim 1 or 2, characterised in that the external dimensions (1, b, h, H) of all members (4) of the string (3) are equal and that the base of at least one groove-shaped recess (10, 11') is curved about an axis running at right-angles, and that preferably at least one groove-shaped recess (10) is rectangular in cross-section.

4. Conveying means according to one of claims 1 to 3, characterised in that a gap is provided between the member (4) and the workpiece carrier (5) fitted thereto.

5. Conveying means according to one of claims 1 to 4, characterised in that the member (4) is provided with a plurality of groove-shaped recesses (14, 15, 10, 11, 11') both on the outer side and the inner side facing the guide wheels (100, 101), and in the straight section (3a, 3b) of the string (3) there are provided at least two straight guide rails (1, 1') and in each of the curved sections (3c, 3d) at least one curved guide rail (2), wherein the guide rails (1, 1', 2) preferably overlap in the transitional areas (3e).

6. Conveying means with a string (3), driven in a continuously circulating manner and retained by means of guide rails (1, 1', 2), for guiding workpiece carriers (5), wherein the string (3) has two straight sections (3a, 3b) and two curved sections (3c, 3d) and a self-contained row of members (4) lying end-face to end-face (16) in which recesses (10, 11, 11', 14, 15) are provided for the engagement of guides (1, 1', 2) and for support thereby, characterised in that the string (3) of members (4) guided around two guide wheels (100, 101) is supported by guide rails (1, 1', 2) from opposite sides in the straight sections (3a, 3b), and from outside in the curved sections (3c, 3d), and that at least one workpiece carrier (5) is fitted onto each member (4) and each member (4) is provided on opposite sides with at least partly grooved (10, 11, 11', 14, 15) recesses (10) extending in the longitudinal direction of transport (7), wherein external guide rails (1) in the straight section (3a, 3b) of the string (3) are interrupted for the length (l) of at least one member (4), a gripping part (30, 30') adjustable in a translatory manner at right-angles (8) to the longitudinal direction of transport (7) is provided with a longitudinal groove (34, 34'), with which a bottom tongue (88) of the workpiece carrier (5) can be engaged, and security guide rods (26, 26') in the same direction at right-angles (8) are fixed on the gripping part (30, 30') by means of support arms (31).

7. Conveying means according to claim 6, characterised in that the gripping part (30, 30') is attached to a lifting rod (29, 29') adjustable in a translatory manner, driveable by means of a servo-motor, guide roller or the like and mounted on the frame (104) of the conveying means.

8. Conveying means according to claim 6 or 7, characterised in that the gap between the security guide rods (25, 25'; 26, 26') corresponds to the length (l) of one member (4) of the string (3).

9. Conveying means according to one of claims 6 to 8, characterised in that the workpiece carrier (5) has the form of a box closed towards the inside by a base (32) and open to the outside.

10. Use of a conveying means according to one of claims 1 to 9 for transporting tubular packages for liquids, open on one side, in a machine for manufacturing and/or filling and/or closing such packages.

## Revendications

1. Dispositif transporteur, avec une chaîne (3), entraînée en rotation sans fin et maintenue à l'aide de rails de guidage (1, 1', 2), pour le guidage de porte-pièces (5), où la chaîne (3) comporte deux tronçons rectilignes (3a, 3b) et deux tronçons courbes (3c, 3d), et comporte une série, fermée en soi, d'éléments (4) s'appuyant les uns contre les autres par des surfaces frontales (16), éléments (4) dans lesquels sont prévus des évidements (10, 11, 11', 14, 15) pour permettre une prise des guidages (1, 1', 2) et pour permettre un soutien par ces derniers, caractérisé en ce que la chaîne (3) d'éléments (4), guidée autour de deux roues de renvoi (100, 101), est soutenue par des rails de guidage (1, 1', 2), par des faces opposées dans les tronçons rectilignes (3a, 3b), et par l'extérieur dans les tronçons courbes (3c, 3d) ; et qu'au moins un porte-pièce (5) est rapporté à chaque élément (4), et chaque élément (4) comporte, sur ses faces opposées, des évidements (10) configurés au moins comme des gorges partielles (10, 11, 11', 14, 15) et s'étendant dans la direction longitudinale de transport (7), où à la face extérieure de l'élément (4) sont rapportés au moins deux évidements (10, 14), dont l'un (14) est prévu pour une prise avec les rails de guidage (1, 1') dans le tronçon rectiligne (3a, 3b), et dont l'autre (10) est prévu pour une prise avec les rails de guidage (2) dans les tronçons courbes (3c, 3d).

2. Dispositif transporteur selon la revendication 1, caractérisé en ce que chaque élément (4) de la chaîne (3) comporte, à l'extrémité avant et à l'extrémité arrière, des surfaces frontales (16), qui courent perpendiculairement à la direction longitudinale (7), surfaces frontales qui extérieurement sont en partie planes (16') et pour le reste partiellement incurvées (16'') ; qu'un trou (9) traverse l'élément (4) dans la direction transversale (8) et reçoit un boulon (13), qui entre en prise par guidage et/ou par entraînement avec les dents (102) des roues de renvoi (100, 101) ; et que chaque élément (4) comporte, sur sa face intérieure, dirigée vers les roues de renvoi (100, 101), un évidement (11), s'étendant dans le sens longitudinal (7), destiné à recouvrir les dents (102) des roues de renvoi (100, 101), cet évidement (11) étant traversé par le trou (9).

3. Dispositif transporteur selon la revendication 1 ou 2, caractérisé en ce que les dimensions extérieures (l, b, h, H) de tous les éléments (4) de la chaîne (3) sont égales ; et que le fond d'au moins un évidement (10, 11') en forme de gorge est incurvé autour d'un axe courant dans le sens transversal (8) ; et que de préférence au moins un évidement (10) en forme de gorge a une section transversale anguleuse.

4. Dispositif transporteur selon l'une des revendications 1 à 3, caractérisé en ce qu'on prévoit une certaine distance entre l'élément (4) et le porte-pièce (5) assujetti à ce dernier.

5. Dispositif transporteur selon l'une des revendications 1 à 4, caractérisé en ce que l'élément (4) comporte plusieurs évidements en forme de gorge (14, 15, 10, 11, 11'), tant sur sa face extérieure que sur sa face intérieure dirigée vers les roues de renvoi (100, 101), et que, dans les tronçons rectilignes (3a, 3b) de la chaîne (3), on prévoit au moins deux rails de guidage rectilignes (1, 1'), et au moins un rail de guidage incurvé (2) dans chacun des tronçons incurvés (3c, 3d), les rails de guidage (1, 1', 2), de préférence se chevauchant dans les zones de transition (3e).

6. Dispositif transporteur, avec une chaîne (3), entraînée en rotation sans fin et maintenue à l'aide de rails de guidage (1, 1', 2), pour le guidage de porte-pièces (5), où la chaîne (3) comporte deux tronçons rectilignes (3a, 3b) et deux tronçons courbes (3c, 3d), et comporte une série, fermée en soi, d'éléments (4) s'appuyant les uns contre les autres par des surfaces frontales (16), éléments (4) dans lesquels sont prévus des évidements (10, 11, 11', 14, 15) pour permettre une prise des guidages (1, 1', 2) et pour permettre un soutien par ces derniers, caractérisé en ce que la chaîne (3) d'éléments (4), guidée autour de deux roues de renvoi (100, 101), est soutenue dans les tronçons rectilignes (3a, 3b) par les faces opposées et, dans les tronçons courbes (3c, 3d), uniquement par l'extérieur, et au moins un porte-pièce (5) est rapporté à chaque élément (4), et chaque élément (4) comporte sur ses faces opposées des évidements (10), configurées au moins comme des gorges partielles (10, 11, 11', 14, 15) et s'étendant dans le sens longitudinal du transport (7), où des rails de guidage extérieurs (1) sont, dans le tronçon rectiligne (3a, 3b) de la chaîne (3), interrompus sur la longueur (l) d'au moins un élément (4), une pièce de préhension (30, 30'), pouvant subir un déplacement de translation dans la direction transversale (8) à la direction lon-gitudinale de transport, comporte une gorge longitudinale (34, 34'), à l'aide de laquelle une languette de fond (33) du porte-pièce (5) peut être mise en prise, et des barres de guidage de sécurité (26, 26'), courant dans cette même direction transversale (8), sont assujetties par des bras porteurs (31) à la pièce de préhension (30, 30').

7. Dispositif transporteur selon la revendication 6, caractérisé en ce que la pièce de préhension (30, 30') est fixée à une barre de levage (29, 29'), pouvant subir un mouvement de translation dans la direction transversale (8), barre de levage qui peut être entraînée par un servomoteur, un galet à cames ou analogues, et est logé dans le bâti (104) du dispositif transporteur.

8. Dispositif transporteur selon la revendication 6 ou 7, caractérisé en ce que la distance réciproque des barres de guidage de sécurité (25, 25' ; 26, 26') correspond à la longueur (l) d'un élément (4) de la chaîne (3).

9. Dispositif transporteur selon l'une des revendications 6 à 8, caractérisé en ce que le porte-pièce (5) a la forme d'une caisse, ouverte sur le côté extérieur, fermée sur le côté intérieur par un fond (32).

10. Utilisation d'un dispositif transporteur selon l'une des revendications 1 à 9 pour transporter des emballages pour liquides, ouverts sur un côté et tubulaires, dans une machine destinée à fabriquer et/ou à remplir et/ou à fermer des emballages de ce type.
